# EUROPEAN PATENT APPLICATION

(11) **EP 2 985 511 A1**
(43) Date of publication of application: **17.02.2016**
(21) Application number: 14776410.4
(22) Date of filing: 25.03.2014
(51) Int. Cl.: F21S 2/00

(54) **LIGHT GUIDE MEMBER AND METHOD FOR PRODUCING LIGHT GUIDE MEMBER**

(30) Priority: 29.03.2013 JP 2013074553
(71) Applicant: Panasonic Intellectual Property Management Co., Ltd., Osaka-shi, Osaka 540-6207 (JP)
(72) Inventor: NAKAI, Takashi, Osaka-shi, Osaka 540-6207 (JP); OBATA, Yoshio, Osaka-shi, Osaka 540-6207 (JP); KONDO, Tatsuhiko, Osaka-shi, Osaka 540-6207 (JP); ONO, Tatsuji, Osaka-shi, Osaka 540-6207 (JP); KOIZUMI, Hideki, Osaka-shi, Osaka 540-6207 (JP); TANAKA, Toshihiro, Osaka-shi, Osaka 540-6207 (JP)
(74) Representative: Müller-Boré & Partner Patentanwälte PartG mbB
(86) International application number: PCT/JP2014/001684
(87) International publication number: WO 2014/156112

(57) **Abstract**

A light guide member includes a transparent part and a reflective part. The transparent part has an elongated shape. The transparent part includes a light entrance part to be struck by light and a light exit part for allowing light to emerge outside. The light entrance part is an end surface of the transparent part in a longitudinal direction. The light exit part is a surface extending along the longitudinal direction of the transparent part. The reflective part is provided along an opposite surface of the transparent part from the light entrance part. The reflective part is for reflecting light entering the light guide member through the light entrance part toward the light exit part. The transparent part and the reflective part are formed by double extrusion.

## Description

### TECHNICAL FIELD

The invention relates generally to a light guide member and a method for producing the light guide member and more particularly, to a light guide member allowing light to enter through an end surface thereof in a longitudinal direction and to emerge outside through a surface thereof extending along the longitudinal direction, and a method for producing the light guide member.

### BACKGROUND ART

A light guide member is disclosed in JP 2005-198106 A (hereinafter Document 1). This light guide member is in a bar shape and constructed so that light entering through an end surface of the light guide member in a longitudinal direction is reflected by a bottom surface extending along the longitudinal direction, and the reflected light is allowed to emerge outside through an top surface extending along the longitudinal direction.

Incidentally, in light guide members such as that disclosed in Document 1, a reflective part for reflecting light to a light exiting direction is formed by providing a substance with reflectivity, or fine irregularity on a surface through printing or deposition, for example. However, forming the reflective part with such methods increases steps of the production process and causes increase in a production cost. Also, if the reflective part is provided by printing or the like, the reflective part tends to be thin, and this may cause the light to escape through the reflective part. Therefore, light reflectivity thereof may be small.

### DISCLOSURE OF THE INVENTION

It is an object of the present invention to provide a light guide member, which can suppress an increase of its production cost and improve reflectivity at a reflective part.

A light guide member in accordance with the present invention includes the following first aspect. The light guide member includes a transparent part and the reflective part. The transparent part has an elongated shape. The transparent part includes a light entrance part to be struck by light and a light exit part for allowing light to emerge outside. The transparent part includes opposite end surfaces in a longitudinal direction of the transparent part, and at least one of the opposite end surfaces serves as the light entrance part. The light exit part is of a surface extending along the longitudinal direction of the transparent part. The reflective part is of a part provided along an opposite surface of the transparent part from the light exit part. The reflective part is for reflecting light entering the light guide member through the light entrance part toward the light exit part. The transparent part and the reflective part are formed by double extrusion.

The light guide member in accordance with the present invention includes the following second aspect realized in combination with the first aspect. The light exit part and the reflective part are provided on opposite ends of the transparent part in a first direction orthogonal to the longitudinal direction of the transparent part. The transparent part has side surfaces in a second direction orthogonal to both of the longitudinal direction and the first direction. A distance between the side surfaces in the second direction of the transparent part decreases toward the reflective part in the first direction.

Also, the light guide member in accordance with the present invention includes the following third aspect realized in combination with the second aspect. The distance between the side surfaces in the second direction of the transparent part is constant on a side opposite to the reflective part, and decreases towards the reflective part on a side of the reflective part.

Also, the light guide member in accordance with the present invention includes the following fourth aspect realized in combination with the second or third aspect. Each of the side surfaces in the second direction of the transparent part has a curved surface which is curved and expanded so as to be positioned further to an outer side in the second direction toward a side away from the reflective part in the first direction.

Also the light guide member in accordance with the present invention includes the following fifth aspect realized in combination with any of the second to fourth aspects. The transparent part includes a wide part, and a narrow part projected from the wide part to an outside in the first direction. The narrow part has shorter length than the wide part in the second direction, and has smaller area than the wide part in a cross section orthogonal to the longitudinal direction of the transparent part. The reflective part is provided on a projected end surface of the narrow part.

Also, the light guide member in accordance with the present invention includes the following sixth aspect realized in combination with the fifth aspect. Each of side surfaces of the narrow part in the second direction is a curved surface which is curved and expanded so as to be positioned further to an outer side in the second direction toward a side away from the reflective part in the first direction.

Also, a method for producing the light guide member in accordance with the present invention includes the following seventh aspect. The method is for the light guide member including any of the first to sixth aspects. The method includes performing double extrusion of two kinds of synthetic resin materials having different refractive indexes to form the transparent part and the reflective part.

Any of the second to seventh aspects can be added to the first aspect optionally.

According to the present invention, the reflective part can be formed without the providing step of a substance with reflectivity on the light guide member through printing or deposition. Therefore, it is possible to reduce a step of the production process and suppress increase in a production cost of the light guide member. Also, the double extrusion makes is possible to form the thick reflective part which can prevent light from escaping through the reflective part, and thus can improve light reflectivity.

### BRIEF DESCRIPTION OF THE DRAWINGS

Preferred embodiments of the present invention will now be described in further details. Other features and advantages of the present invention will become better understood with regard to the following detailed description and accompanying drawings where:
Fig. 1 is a perspective view illustrating a light guide member of an embodiment,
Fig. 2 is an explanatory diagram of a lighting device which includes the light guide member of the embodiment,
Fig. 3 is an explanatory diagram showing a state where the lighting device of the embodiment is installed,
Fig. 4 is a sectional view of the light guide member of the embodiment,
Fig. 5 is a front view of a light exit part of an example of the embodiment,
Fig. 6 is a sectional side view around a light exit part of another example of the embodiment,
Fig. 7 is a sectional view of a light guide member of another example of the embodiment, and
Fig. 8 is an explanatory diagram of a light guide member of another example of the embodiment.

### DESCRIPTION OF EMBODIMENTS

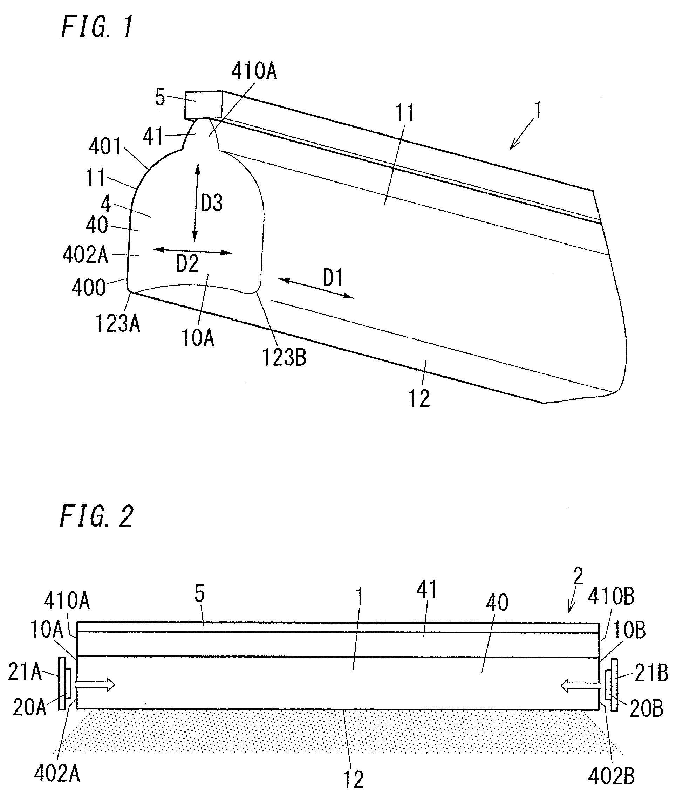

The following describes an embodiment of the present invention with reference to attached drawings. A light guide member 1 of a present embodiment shown in Fig. 1 is used for example as a part of a lighting device. A lighting device 2 which includes the light guide member 1 of the present embodiment is shown in Fig. 2.

The lighting device 2 is provided, for example, on a ceiling, a wall, a floor, or an installed object such as a cabinet, or a panel, of a room. The lighting device 2 includes the light guide member 1, a pair of control substrates 21A and 21B, and a pair of light sources 20A and 20B.

As shown in Fig. 1, the light guide member 1 has an elongated shape extending in one direction. In more detail, the light guide member 1 has a straight bar shape.

Hereinafter, a first direction, which corresponds a direction orthogonal to a longitudinal direction of the light guide member 1 and also a direction which a reflective part 5 and a light exit part 12 (later explained) face each other, is referred to as a height direction; and a second direction, which corresponds to a direction orthogonal to both the longitudinal direction and the height direction of the light guide member 1, is referred to as a width direction. That is, in Fig. 1, a direction indicated by an arrow D1 corresponds to the longitudinal direction of the light guide member 1, a direction indicated by an arrow D2 corresponds to the width direction of the light guide member 1, and a direction indicated by an arrow D3 corresponds to the height direction of the light guide member 1.

The light guide member 1 includes a transparent part 4 and the reflective part 5. The transparent part 4 of the present embodiment includes a light entrance part 10A and the light exit part 12. The transparent part 4 of the present embodiment further includes a light entrance part 10B and a pair of reflective surfaces 11. Hereinafter, the light entrance part 10A and the light entrance part 10B may be referred to as the first light entrance part 10A and the second light entrance part 10B, respectively.

As shown in Fig. 2, the first light entrance part 10A is one end surface of the light guide member 1 in the longitudinal direction. The second light entrance part 10B is an end surface on an opposite end of the light guide member 1 in the longitudinal direction from the first light entrance part 10A. That is, light entering surfaces are provided on both ends in the longitudinal direction of the light guide member 1 of the present embodiment. However, the end surface on the opposite end of the light guide member 1 in the longitudinal direction from the first light entrance part 10A is not limited to be designed as the second light entrance part 10B.

The reflective part (diffusing part) 5, the pair of reflective surfaces 11 and the light exit part (light exit surface) 12 are surfaces extending along the longitudinal direction of the light guide member 1. That is, the reflective part 5, the pair of reflective surfaces 11 and the light exit part 12 are each constituted by a part of an outer peripheral surface of the light guide member 1.

The light exit part 12 of the present embodiment is a surface on one side in the height direction (thickness direction) of the light guide member 1. The reflective part 5 is provided on a surface opposite of the light guide member 1 from the light exit part 12 in the height direction. Each reflective surface 11 is a side surface of the light guide member 1 in the width direction. That is, in the present embodiment, each of the side surfaces of the light guide member 1 in the width direction serves as the reflective surface 11.

A part of the outer peripheral surface of the light guide member excluding the light exit part 12 (a part combining the reflective part 5 and the pair of reflective surfaces 11) is configured to reflect light entering the light guide member 1 through the first light entrance part 10A and the second light entrance part 10B toward the light exit part 12.

A light emitting method of the lighting device 2 is so called edge light type. That is, as shown in Fig. 2, the lighting device 2 emits light from the light exit part 12, which is a surface of the light guide member 1 extending in the longitudinal direction of the light guide member 1, when light is irradiated on the first light entrance part 10A or the second light entrance part 10B.

A control substrate 21A which is one of the pair of control substrates 21A and 21B of the lighting device 2 is provided at a position facing the first light entrance part 10A, and a control substrate 21B which is the other of them is provided at a position facing the second light entrance part 10B. In other words, the control substrate 21A and the control substrate 21B are provided on opposite sides of the light guide member 1 in the longitudinal direction, respectively.

Hereinafter, a light source 20A which is one of the pair of light sources 20A and 20B of the lighting device 2 may be referred to as a first light source 20A, and a light source 20B which is the other of them may be referred to as a second light source 20B. Each of the light source 20A and the light source 20B is for example a light emitting diode. The first light source 20A is mounted on the control substrate 21A, and the second light source 20B is mounted on the control substrate 21B. Accordingly, the first light source 20A is provided on a side of one end of the light guide member 1 in the longitudinal direction, and the second light source 20B is provided on a side of the other end of the light guide member 1 in the longitudinal direction. The first light source 20A faces the first light entrance part 10A. The second light source 20B faces the second light entrance part 10B.

The first light source 20A is electrically connected to a circuit provided on the control substrate 21A. The first light source 20A emits light when receiving electric power through the circuit on the control substrate 21A. The second light source 20B is electrically connected to a circuit provided on the control substrate 21B. The second light source 20B emits light when receiving electric power through the circuit on the control substrate 21B. Both of the light source 20A and the light source 20B are configured to emit light in use of the lighting device 2.

The light emitted from the first light source 20A enters the light guide member 1 through the first light entrance part 10A corresponding thereto. The light emitted from the second light source 20B enters the light guide member 1 through the second light entrance part 10B corresponding thereto. Light entered the light guide member 1 through the light entrance parts 10A and 10B as described is reflected by the reflective part 5 and the pair of reflective surfaces 11 toward the light exit part 12 while advancing through the interior of the light guide member 1 toward substantially the opposite end surface in the longitudinal direction. Then the light reflected by the reflective part 5 and the pair of reflective surfaces 11 as described exits through an entire part of the light exit part 12. In this way, the light exit part 12 emits light in a band-like manner. Note that the lighting device 2 can be a device having only one of the light sources 20A and 20B.

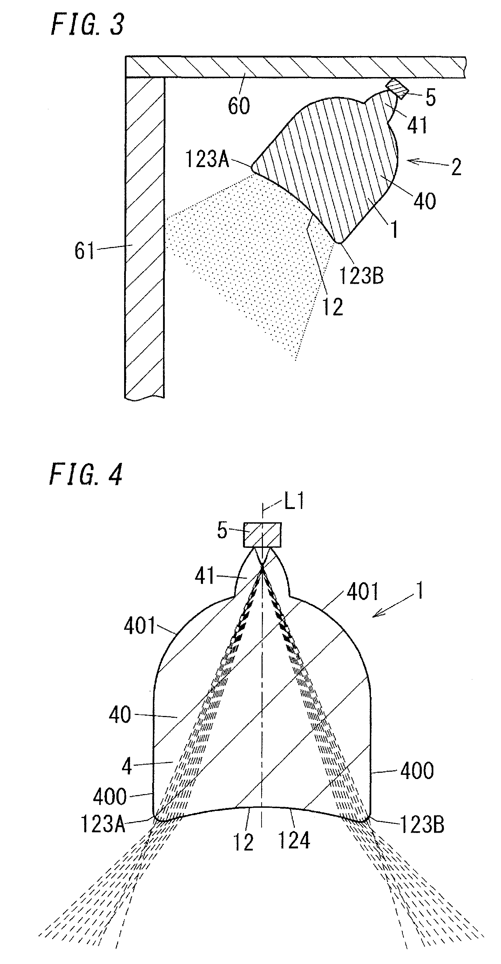

The lighting device 2 is installed along a corner defined by a wall 61 and a ceiling 60 of a building as shown in Fig. 3, for example. The light guide member 1 of this lighting device 2 is at right under the ceiling 60. Also, the light guide member 1 is arranged so that the light exit part 12 is directed obliquely downward and faces the wall 61. The lighting device 2 shown in Fig. 3 is used as an indoor lighting device and illuminates the wall 61 with the light emitted through the light exit part 12.

Hereinafter the light guide member 1 and the lighting device 2 are explained in detail. As shown in Fig. 1, the light guide member 1 of the present embodiment includes only the transparent part 4 and the reflective part 5. The transparent part 4 and the reflective part 5 are arranged in the height direction of the light guide member 1.

The transparent part 4 has an elongated shape extending in the longitudinal direction of the light guide member 1. The reflective part 5 is provided on a surface extending along the longitudinal direction of the transparent part 4.

The light guide member 1 is made of synthetic resin. The light guide member 1 is formed by an extrusion. The light guide member 1 of the present embodiment is produced by a double extrusion (co-extrusion) using a synthetic resin material for the transparent part 4 and a synthetic resin material for the diffusion part 5A.

The synthetic resin material for the transparent part 4 has a translucency (optical transparency). The synthetic resin material for the transparent part 4 is for example PMMA (polymethylmethacrylate), or PMMA with any one of or combination of PMA (poly(methyl acrylate)) and acrylic rubber. PMA and acrylic rubber have substantially same refractive index of light with PMMA, and thus less likely to spoil transparency of the light guide member 1. Further, it is possible to improve formability and shock resistance of the light guide member 1.

The synthetic resin material for the reflective part 5 is for example, a material containing: the same synthetic resin material for the transparent part 4; and titanium oxide or the like for coloring. That is, the synthetic resin material for the reflective part 5 is a material in which titanium oxide or the like is added to a main component which is PMMA or PMMA with any one of or combination of PMA and acrylic rubber.

Note that, the synthetic resin material for the reflective part 5 can be a material containing: synthetic resin material different from the synthetic resin material for the transparent part 4; and titanium oxide or the like for coloring. For example, materials containing: ABS (acrylonitrile butadiene styrene), ASA (Acrylonitrile Styrene Acrylate resin), polyvinyl chloride, polyester, polyolefin, polyamide or the like; and titanium oxide or the like for coloring can be used as the synthetic resin material for the reflective part 5. The material for the transparent part 4 and the material for the reflective part 5 may be other material such as polycarbonate or the like.

The synthetic resin material for the transparent part 4 and the synthetic resin material for the reflective part 5 have different refractive indices of light so that a reflectance of the reflective part 5 is higher than that of the transparent part 4.

As shown in Fig. 1, a cross section of the light guide member 1 orthogonal to the longitudinal direction thereof is uniform in the longitudinal direction of the light guide member 1. Also, as shown in Fig. 4, the cross section of the light guide member 1 orthogonal to the longitudinal direction thereof is symmetry with respect to a central line L1 which passes through a center of the light guide member 1 in the with direction.

The transparent part 4 has a wide part 40 and a narrow part 41. The transparent part 4 of the present embodiment only includes the wide part 40 and the narrow part 41.

A width of the wide part 40 is wider than that of the narrow part 41. The wide part 40 has a larger area in the cross section orthogonal to the longitudinal direction of the light guide member than the narrow part 41. The narrow part 41 is projected from an end part on a side of the reflective part 5 of the wide part 40 and a center portion in a width length of the wide part 40. A projection direction of the narrow part 41 is parallel to the height direction of the light guide member 1.

As shown in Fig. 2, the light entrance part 10A includes an end surface 402A in a longitudinal direction of the wide part 40 and an end surface 410A in a longitudinal direction of the narrow part 41 which is in a same surface level as the end surface 402A. Also, the light entrance part 10B includes an end surface 402B which is an opposite surface of the wide part 40 from the end surface 402A in the longitudinal direction, and an end surface 410B which is an opposite surface of the narrow part 41 from the end surface 410A and is in a same surface level as the end surface 402B.

The light entrance parts 10A and 10B (end surfaces of the light guide member 1 in the length direction) are orthogonal to the longitudinal direction of the transparent part 4 (the longitudinal direction of the light guide member 1). The light entrance parts 10A and 10B are smooth surfaces with little irregularity made by a laser cutting.

The light sources 20A and 20B are positioned so that those overlap with the wide part 40 in the longitudinal direction of the light guide member 1. That is, the first light source 20A faces an end surface in the longitudinal direction of the wide part 40, which is a part of the first light entrance p 10A. The second light source 20B faces an end surface in the longitudinal direction of the wide part 40, which is a part of the second light entrance part 10B. Each of the light sources 20A and 20B is positioned so as not to face the narrow part 41.

As above mentioned, the area of the cross section of the wide part 40 orthogonal to the longitudinal direction of the light guide member 1 is larger than that of the narrow part 41. Further, the light sources 20A and 20B face the wide part 40. As a result, even if the light sources 20A and 20B are large in size, it is possible to allow substantially entire light from the light sources 20A and 20B to enter through the light entrance parts 10A and 10B. Also, the light guide member 1 can be downsized because the area of the cross section of the narrow part 41 orthogonal to the longitudinal direction of the light guide member 1 is smaller than that of the wide part 40.

Light from the first light source 20A enters the light guide member 1 through the end surface in the longitudinal direction of the wide part 40 which is a part of the first light entrance part 10A. Light from the second light source 20B enters the light guide member 1 through the end surface in the longitudinal direction of the wide part 40 which is a part of the second light entrance part 10B.

As shown in FIG. 1, in the present embodiment, the reflective part 5 is provided on a projected end surface of the narrow part 41. In this regard, the projected end surface of the narrow part 41 is an apical surface of the narrow part 41 which is projected from the wide part 40. The projected end surface of the narrow part 41 is a plane surface orthogonal to the height direction of the light guide member 1. The reflective part 5 extends over an entire longitudinal direction length of the transparent part 4.

As shown in Fig. 4, a cross section of the reflective part 5 orthogonal to the longitudinal direction has a long rectangular shape extending in the width direction of the light guide member 1. A width of the reflective part 5 (a length in a direction equivalent to the width direction of the light guide member 1) is wider than a width of the projected end surface of the narrow part 41. Side end parts of the reflective part 5 in the width direction are projected outward than respective sides in the width direction of the projected end surface of the narrow part 41. The reflectance of the reflective part 5 is higher than that of the transparent part 4. Light entered the transparent part 4 through the light entrance parts 10A and 10B is diffused and reflected by the reflective part 5 toward the light exit part 12 (to the wide part 40 side).

In the embodiment, side surfaces of the transparent part 4 in a width direction serve as the reflective surfaces 11. That is, each of the reflective surfaces 11 is constituted by a side surface of the narrow part 41, and a side surface of the wide part 40 which is connected with the side surface of the narrow part 41.

The width of the narrow part 41 gradually increases toward the wide part 40 in the height direction of the light guide member 1. The width of the wide part 40 is constant in a region near the light exit part 12, and the width of the wide part 40 on a side of the narrow part 41 gradually decreases toward the narrow part 41 in the height direction of the light guide member 1. In other words, the width of the transparent part 4 gradually decreases toward the reflective part 5.

Each of the side surfaces of the narrow part 41 in the width direction is a curved surface, which has, in a cross section orthogonal to the longitudinal direction of the light guide member 1, substantially an arc shape curved and protruded outward of the wide part 41. In detail, the side surfaces of the narrow part 41 are curved surfaces having substantially a parabolic shape in cross section. Therefore, light reached to the side surfaces of the narrow part 41 after being reflected by the reflective part 5 is likely to be totally reflected by the narrow part 41 toward the light exit part 12. Also, although not shown in the drawings, the reflective part 5 of the present embodiment is attached to the lighting device 2 by inserted in a fitting part of a holder (not shown) of the lighting device 2. That is, the reflective part 5 is used as an attachment part which is for attached to the holder.

Each of the side surfaces of the wide part 40 in the width direction includes a linear part 400 and a curved part 401. Each of the side surfaces of the wide part 40 of the present embodiment only includes the linear part 400 and the curved part 401.

The linear part 400 is closer to the light exit part 12 than the curved part 401 is. The linear part 400 is a surface substantially parallel to the height direction of the light guide member 1. The curved part 401 is a curved surface having an arc cross section which is curved so as to be positioned gradually further inward in the width direction of the light guide member 1 toward the narrow part 41, in the longitudinal direction of the light guide member 1. The curved part 401 continues to the linear part 400. The curved part 401 is connected to an end part, on the light exit part 12 side, of a corresponding side surface of the narrow part 41. An internal corner part, which is recessed inward, of the light guide member 1 is defined by the curved part 401 and the side surface of the narrow part 41.

Part of light reached the wide part 40 after being reflected by the reflective part 5 and the side surface of the narrow part 41 is likely to be totally reflected by the curved part 401 to the light exit part 12 side.

The light exit part 12 is a surface facing a side opposite of the wide part 40 from the narrow part 41 (opposite from the reflective part 5). The light exit part 12 extends over the entire length of the transparent part 4 in the longitudinal direction. Light reflected by the reflective part 5 to the wide part 40 side is allowed to exit through the light exit part 12.

A part of the light exit part 12, excluding end parts in the width direction of the light guide surface 12, is a concaved surface 124. The concaved surface 124 is concaved so as to be positioned further closer to the reflective part 5 in the height direction of the light guide member 1 toward a central part of the concaved surface 124 in the width direction. In a cross section of the concaved surface 124 orthogonal to the longitudinal direction of the light guide member 1, the concaved surface 124 has an arc shape curved inwardly toward the reflective part 5. Since that, light exiting through the light exit part 12 mostly are refracted toward the outer side in the width direction of the light guide member 1. Therefore, an area wider than that of the light exit part 12 can be illuminated by the light exiting through the light exit part 12.

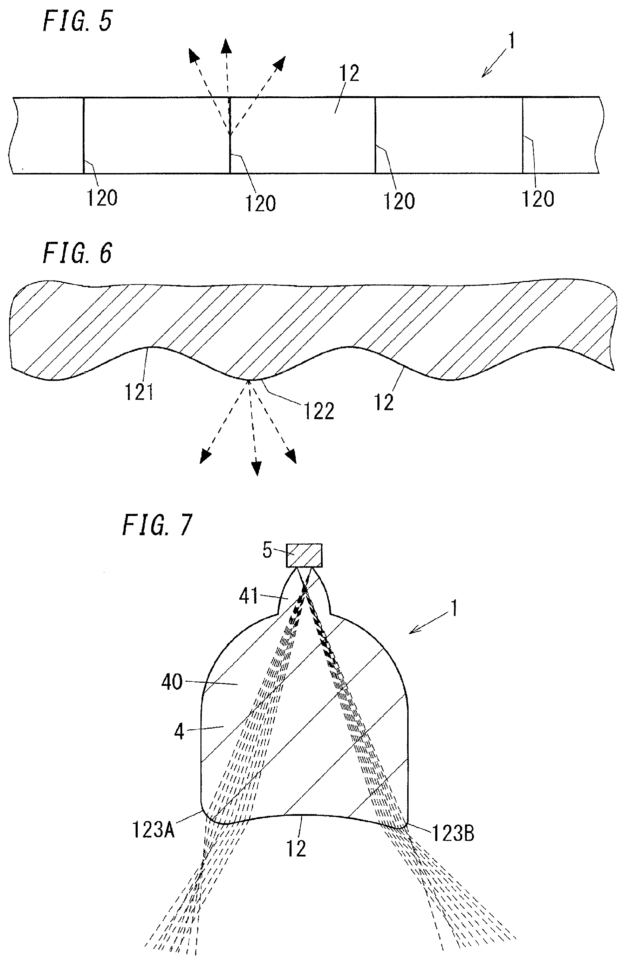

Note that, cross section of the light exit part 12 of the present embodiment is uniform in the longitudinal direction of the transparent part 4, but it can change in the longitudinal direction of the light guide member 1 as shown in Fig. 5 and Fig. 6. In an example shown in Fig. 5, lines 120 which are very fine are provided on multiple points in the longitudinal direction of the light exit part 12. Each of the lines 120 is a groove or a ridge. Each of the lines 120 extends in parallel to the width direction of the light exit part 12, and extends over entire length in the width direction of the light exit part 12. Each of the lines 120 is formed by for example, a flow mark occurred during the extrusion of the light guide member 1. With the lines 120 provided on the light exit part 12, it is possible to diffuse light in the longitudinal direction of the light guide member 1, as shown by arrows in Fig. 5.

In an example shown in Fig. 6, the light exit part 12 is formed in a wavelike shape having concave portions 121 and convex portions 122 arranged alternatingly. The light exit part 12 having the wavelike shape is formed for example, by molding sink occurred during molding of the light guide member 1. It is possible to diffuse the light exiting through the light exit part 12 to the longitudinal direction of the light guide member 1 by forming the light exit part 12 in the wavelike shape in this manner.

As shown in Fig. 4, the light exit part 12 includes a pair of curved surfaces 123A and 123B. The curved surface 123A is provided on one end part in the width direction of the light exit part 12, and the curved surface 123B is provided on the other end part in the width direction of the light exit part 12. The curved surfaces 123A and 123B are each curved so as to be positioned further closer to the reflective part in the height direction of the light guide member 1 toward an outer side of the light exit part 12 in the width direction.

The curved surfaces 123A and 123B are located on outer sides than the reflective part 5 in the width direction of the light guide member 1. The curved surfaces 123A and 123B are corner parts connecting the light exit part 12 and the respective side surfaces of the wide part 40 (more precisely the linear parts 400).

In the cross section of the light exit part 12 orthogonal to the longitudinal direction of the light guide member 1, the curved surfaces 123A and 123B have arc shapes having same radius of curvature and each central angle is substantially 90°. The concaved surface 124 of the light exit part 12 and a side surface of the wide part 40 on a side of the curved surface 123A are formed continuously through the curved surface 123A without forming a corner. The concaved surface 124 of the light exit part 12 and a side surface of the wide part 40 on a side of the curved surface 123B are formed continuously through the curved surface 123B without forming a corner.

Broken lines in Fig. 4 show rays of light reflected by the reflective part 5 which was obtained by an analysis. As shown in Fig. 4, light that reaches the curved surfaces 123A, 123B from the reflective part 5 is scattered by the curved surfaces 123A, 123B and exit to the outside. In this case, the curved surfaces 123A and 123B give some diffusivity to the light exiting through the end parts of the light exit part 12. That is, as to light travels from the reflective part 5 to the light exit part 12 while expanding in the width direction of the light guide member 1, part of the light that reaches the curved surface 123A, 123B is diffused and refracted by the curved surface 123A, 123B toward the center of the light exit part 12 in the width direction. Since that, in an outer side part in the width direction of a region illuminated by the light exited from the light exit part 12, the luminance of the light gradually decreases towards the outer sides in the width direction.

As shown in Fig. 7, radii of curvature of the curved surfaces 123A and 123B can be different from each other. Broken lines in Fig. 7 show rays of light reflected by the reflective part 5 which was obtained by an analysis. As shown in Fig. 7, when radii of curvature of the curved surfaces 123A and 123B are different, the curved surfaces 123A and 123B shows different scattering properties of light. That is, light distribution characteristics of the light exiting through the light exit part 12 are different between the opposite end parts in the width direction of the light exit part 12.

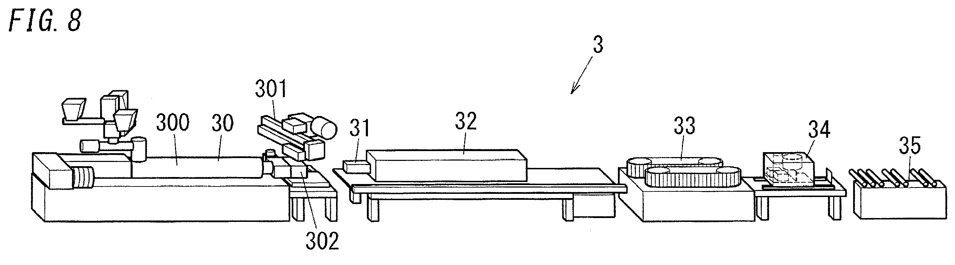

Next, a manufacturing apparatus 3 for the light guide member 1 is explained. The manufacturing apparatus 3 which is a production line of the light guide member 1 of the present embodiment is shown in Fig. 8.

The manufacturing apparatus 3 includes an extruder 30, a sizing 31, a water tank 32, a caterpillar haul-off 33, a cutter 34, and an arranging machine 35.

The extruder 30 is a double extruder, and an extrusion die 302 is provided on an end of the extruder 30. The extruder 30 includes a first extrusion machine 300 and a second extrusion machine 301. The cutter 34 conducts cutting by for example, the irradiation of a carbon dioxide gas laser (CO₂ laser) with an output of 100 W.

The sizing 31, the water tank 32, the caterpillar haul-off 33, the cutter 34, and the arranging machine 35 are arranged in this order in an extrusion direction of an extruded product which is extruded from the extruder 30. In other words, the extruder 30, the sizing 31, the water tank 32, the caterpillar haul-off 33, the cutter 34, and the arranging machine 35 are arranged in this order from the upstream of the production line.

A production method for the light guide member 1 of the present embodiment includes an extrusion step, a sizing step, a cooling step, a pulling step, a cutting step, and an arranging step.

In the extrusion step, the extruded product is molded through a double extrusion by the extruder 30. In this extrusion, a synthetic resin material for the transparent part 4 is plasticized by the first extrusion machine 300 and extruded from the extrusion die 302, and in parallel thereto, a synthetic resin material for the reflective part 5 is plasticized by the second extrusion machine 301 and extruded from the extrusion die 302. In this step, the extruded product having the synthetic resin material for the transparent part 4 and the synthetic resin material for the reflective part 5 integrally is extruded from the extruder 30 through the extrusion die 302 into a downstream of the production line. Note that, the cutting step, in other words a step of cutting the extruded product which is extruded from the extruder 30 continuously in a desired length, which will be explained later, is not included in the extrusion step.

In the pulling step, the extruded product which is an intermediate product as being extruded through the extrusion die 302, is pulled by the caterpillar haul-off 33. In this manner, the extruded product passes through the sizing 31 and the water tank 32 accordingly. In other words, the light guide member 1 is produced through steps in an order of the extrusion step with the extruder 30, the sizing step with the sizing 31, the cooling step at the water tank 32, and the arranging step by the arranging machine 35.

In the sizing step, the sizing 31 shapes the extruded product into a predetermined shape while the extruded product passes through the sizing 31. In this way, after passing through the sizing 31, the extruded product 62 has same cross section as the light guide member 1 which is the manufactured product.

In the cooling step, the extruded product passes through the water tank 32. In this manner, the extruded product is cooled and solidified by water in the water tank 32. As explained, after passing through the extrusion die 302, the sizing 31 and the water tank 32 in this order, the extruded product passes through the caterpillar haul-off 33, and then reaches the cutter 34.

In the cutting step, the extruded product is cut by laser irradiated from the cutter 34 while moving in the extrusion direction by the caterpillar haul-off 33. In other words, the cutting step is a step conducted in parallel (step conducted in-line) to the extrusion step. In detail, a laser cutting in the cutting step is conducted to the extruded product (before cut in the desired length) which is being extruded continuously from the extruder 30.

More specifically, the carbon dioxide gas laser is irradiated by the cutter 34 on the extruded product 62, which is passing the cutter 34, from a direction orthogonal to a longitudinal direction of the extruded product, so that the extruded product is cut in the direction orthogonal to the longitudinal direction thereof. As a result, light guide members 1 including the transparent part 4 and the diffusing part 5A and having the desired length can be cut out. In the light guide members 1 cut out in this way, each of the end surfaces in a longitudinal direction of the light guide members 1 (the light entrance parts 10A and 10B) has an entirely smooth surface resulting from the fusion by the laser emitted from the cutter 34.

In the arranging step, the light guide members 1 which were cut out as above mentioned manner are sequentially arranged and provided by the arranging machine 35.

A light guide member 1 in accordance with the present embodiment includes the following first aspect. The light guide member 1 includes the transparent part 4 and the reflective part 5. The transparent part 4 has an elongated shape. The transparent part 4 includes the light entrance part 10A to be struck by light and the light exit part 12 for allowing light to emerge outside. The transparent part 4 includes the opposite end surfaces in the longitudinal direction of the transparent part 4, and at least one of the opposite end surfaces serves as the light entrance part 10A. The light exit part 12 is of a surface extending along the longitudinal direction of the transparent part 4. The reflective part 5 is of a part provided along an opposite surface of the transparent part 4 from the light exit part 12. The reflective part 5 is for reflecting light entering the light guide member 1 through the light entrance part 10A toward the light exit part 12. The transparent part 4 and the reflective part 5 are formed by double extrusion.

According to the light guide member 1, the reflective part 5 can be formed without providing a substance with reflectivity through printing or deposition. Therefore, it is possible to reduce a step of production process and suppress increase in a production cost of the light guide member 1. Also, the double extrusion makes it possible to form the thick reflective part 5 which can prevent light from escaping through the reflective part, and thus can improve light reflectivity. Further, the reflective part 5 having a large thickness allows the reflective part 5 to be used as the attachment part when the reflective part 5 is attached to the holder of the lighting device 2, as described above. Also, since the reflective part 5 is provided by the double extrusion, it is possible to ensure a positional accuracy of the reflective part 5 to the transparent part 4 and to stabilize a shape of the reflective part 5. Furthermore, there is an advantage in that an interface between the transparent part 4 and the reflective part 5 is hardly damaged.

The light guide member 1 in accordance with the present embodiment includes the following second aspect realized in combination with the first aspect. The light exit part 12 and the reflective part 5 are provided on opposite ends of the transparent part 4 in the height direction of the light guide member 1 (the first direction orthogonal to the longitudinal direction of the transparent part 4). The transparent part 4 has side surfaces in the width direction of the light guide member 1 (the second direction orthogonal to both of the longitudinal direction of the transparent part 4 and the height direction of the light guide member 1). The distance between the side surfaces in the second direction of the transparent part 4 decreases toward the reflective part 5 in the height direction of the light guide member 1.

In the light guide member 1, the side surfaces of the transparent part 4 incline in directions so that light is easily reflected towards the light exit part 12. Thereby, light entering the light guide member through the light entrance parts 10A and 10B can be reflected by the side surfaces of the transparent part 4 and guided toward the light exit part 12. Note that, a feature of "the distance between the side surfaces of the transparent part 4 decrease toward the reflective part 5 in the height direction of the light guide member 1" is not limited to a configuration in which the width of the transparent part 4 decreases steadily in the entire height direction length. For example, this feature include a configuration in which the transparent part 4 includes a region (corresponding to the linear part 400) where a distance between side surfaces thereof is constant, in the height direction of the light guide member 1, as in the present embodiment.

The light guide member 1 in accordance with the present embodiment includes the following third aspect realized in combination with the second aspect. The distance between the side surfaces of the transparent part 4 in the width direction of the light guide member 1 is constant on a side opposite to the reflective part 5, and decreases towards the reflective part 5 on a side of the reflective part 5.

The part of the transparent part 4 of the light guide member 1 on the side opposite to the reflective part 5 (a part where the distance between the side surfaces of the light guide member in the width direction is constant) has a large area in cross section orthogonal to the length direction of the light guide member 1. Therefore, a light source 20A having a large size can be provided on a position corresponding to the part of the transparent part 4 on the side opposite to the reflective part 5. Also, parts of the side surfaces of the transparent part 4 on the side of the reflective part 5 are inclined so that light is reflected easily toward the light exit part 12. Therefore, it is possible to guide the light entering the light guide member through the light entrance parts 10A and 10B toward the light exit part 12.

The light guide member 1 in accordance with the present embodiment includes the following fourth aspect realized in combination with the second or third aspect. Each of the side surfaces of the transparent part 4 in the width direction of the light guide member 1 has the curved part 401 (curved surface). Each of the curved parts 401 is curved and expanded so as to be positioned further to an outer side in the width direction of the light guide member 1 toward a side away from the reflective part 5 in the height direction of the light guide member 1.

With the light guide member 1, the light entering the light guide member through the light entrance part 10A and 10B can be reflected and guided by the curved part 401 toward the light exit part 12.

The light guide member 1 in accordance with the present embodiment includes the following fifth aspect realized in combination with any of the second to fourth aspects. The transparent part 4 includes the wide part 40, and the narrow part 41 projected from the wide part 40 to an outside in the height direction of the light guide member 1. The narrow part 41 has shorter length than the wide part 40 in the width direction of the light guide member 1 and has smaller area than the wide part 40 in the cross section orthogonal to the longitudinal direction of the transparent part 4. The reflective part 5 is provided on a projected end surface of the narrow part 41.

In the light guide member 1, the light source 20A is provided to face the wide part 40 which has large area in the cross section. As a result, even if the light source 20A is large in size, it is possible to allow substantially entire light from the light source 20A to enter through the light entrance part 10A, and thus to suppress loss in light quantity. Also, the light guide member 1 can be downsized because an area of the cross section of the narrow part 41 which does not face the light source 20A is downsized.

The light guide member 1 in accordance with the present invention includes the following sixth aspect realized in combination with the fifth aspect. Each of side surfaces of the narrow part 41 in the width direction of the light guide member 1 is a curved surface which is curved and expanded so as to be positioned further to an outer side in the width direction of the light guide member 1 toward a side away from the reflective part 5 in the height direction of the light guide member 1.

In the light guide member 1, light reflected by the side surfaces of the narrow part 41 after having reflected by the reflective part 5 is less likely to advance sideways in the width direction of the transparent part 4. Therefore, the light is less likely to escape through the side surfaces of the wide part 40. That is, the light reflected by the side surfaces of the narrow part 41 can be focused to the light exit part 12, and the light can be emerged outside through the light exit part 12 efficiently.

The method for producing the light guide member 1 in accordance with the present invention includes the following seventh aspect. The method is for producing the light guide member 1 including any one of the first to sixth aspects. The method includes performing double extrusion of two kinds of synthetic resin materials having different refractive indexes to form the transparent part and the reflective part.

With the method for producing the light guide member 1, the reflective part 5 can be formed without a step of providing a substance with reflectivity through printing or deposition. Therefore, it is possible to reduce a step of production process and suppress increase in a production cost of the light guide member 1. Also, the double extrusion makes it possible to form the thick reflective part 5 which prevent light from escaping through the reflective part, and thus can improve light reflectivity. Further, the reflective part 5 having a large thickness allows the reflective part 5 to be used as the attachment part when the reflective part 5 is attached to the holder of the lighting device 2. Also, since the reflective part 5 is provided by the double extrusion, it is possible to ensure a positional accuracy of the reflective part 5 to the transparent part 4 and to stabilize a shape of the reflective part 5. Furthermore, there is an advantage in that an interface between the transparent part 4 and the reflective part 5 is hardly damaged.

Note that, any of the second to seventh aspects can be added to the first aspect optionally.

In the transparent part 4 of the present embodiment, the narrow part 41 is projected from the central part of the wide part 40 in the width direction. However, the cross section of the transparent part 4 is not limited to this. For example, the narrow part 41 may be projected from one side of the wide part 40 in the width direction so that the width of the transparent part 4 decreases from the light exit part 12 toward the reflective part 5.

The side surfaces of the wide part 40 on the reflective part 5 side may be inclined so as to be positioned further to an inner side in the width direction toward the reflective part 5. Also, part, corresponding to the linear part 400, of the transparent part 4 may be curved or inclined so that the width of the transparent part 4 further decreases towards the reflective part 5.

Also, the side surface of the narrow part 41 does not have to be the arc cross sectional surface, but may be a linear cross sectional surface. Further, in the present embodiment, the cutting step is a step conducted in parallel (step conducted in-line) to the extrusion step. However, it is possible to produce the light guide member 1 by cutting the extruded product with means other than laser, and then cutting ends of the cut extruded product with laser. Furthermore, the cross section of the light guide member 1 can be modified as appropriate. Also, designs of the manufacturing apparatus 3 can be modified as appropriate.

Although the present invention has been described with reference to certain preferred embodiments, numerous modifications and variations can be made by those skilled in the art without departing from the true spirit and scope of this invention, namely claims.

## Claims

1. A light guide member comprising:
a transparent part; and,
a reflective part,
the transparent part having an elongated shape,
the transparent part including a light entrance part to be struck by light, and a light exit part for allowing light to emerge outside,
the transparent part including opposite end surfaces in a longitudinal direction of the transparent part, at least one of the opposite end surfaces serving as the light entrance part,
the light exit part being of a surface extending along the longitudinal direction of the transparent part,
the reflective part being of a part provided along an opposite surface of the transparent part from the light exit part,
the reflective part being for reflecting light entering the light guide member through the light entrance part toward the light exit part,
the transparent part and the reflective part being formed by double extrusion.

2. The light guide member of claim 1, wherein
the light exit part and the reflective part are provided on opposite ends of the transparent part in a first direction orthogonal to the longitudinal direction of the transparent part, and
the transparent part has side surfaces in a second direction orthogonal to both of the longitudinal direction and the first direction, a distance between the side surfaces in the second direction of the transparent part decreasing toward the reflective part in the first direction.

3. The light guide member of claim 2, wherein the distance between the side surfaces in the second direction of the transparent part is constant on a side opposite to the reflective part, and decreases towards the reflective part on a side of the reflective part.

4. The light guide member of claim 2 or 3, wherein each of the side surfaces in the second direction of the transparent part has a curved surface which is curved and expanded so as to be positioned further to an outer side in the second direction toward a side away from the reflective part in the first direction.

5. The light guide member of any one of claims 2 to 4, wherein
the transparent part includes a wide part and a narrow part projected from the wide part to an outside in the first direction,
the narrow part has shorter length than the wide part in the second direction, and has smaller area than the wide part in a cross section orthogonal to the longitudinal direction of the transparent part, and
the reflective part is provided on a projected end surface of the narrow part.

6. The light guide member of claim 5, wherein each of side surfaces of the narrow part in the second direction is a curved surface which is curved and expanded so as to be positioned further to an outer side in the second direction toward a side away from the reflective part in the first direction.

7. A method for producing the light guide member of any one of claims 1 to 6, the method comprising performing double extrusion of two kinds of synthetic resin materials having different refractive indexes to form the transparent part and the reflective part.
